# EUROPEAN PATENT APPLICATION

(11) **EP 2 765 461 A1**
(43) Date of publication of application: **13.08.2014**
(21) Application number: 12838647.1
(22) Date of filing: 02.10.2012
(51) Int. Cl.: G03G 15/20

(54) **MULTILAYER METAL MEMBER FOR FIXATION**

(30) Priority: 07.10.2011 JP 2011223400
(71) Applicant: NOK Corporation, Tokyo 105-8585 (JP); Synztec Co., Ltd., Tokyo 105-0012 (JP)
(72) Inventor: SUGIYAMA, Shingo, Fujisawa-shi, Kanagawa 251-0042 (JP); NISHIDA, Akira, Fujisawa-shi, Kanagawa 251-0042 (JP); TAKEDA, Minoru, Tokyo 105-0012 (JP)
(74) Representative: Strehl Schübel-Hopf & Partner
(86) International application number: PCT/JP2012/075561
(87) International publication number: WO 2013/051582

(57) **Abstract**

The multilayer metal member of the invention includes a metallic base having a first layer 11 which is an electrocast seamless belt made of nickel or a nickel alloy, and a second layer 12 which is an electrocast seamless belt made of a metal having a Young's modulus lower than that of the first layer 11; and a fluororesin layer 17 provided on the second layer 12 side of the metallic base by the mediation of an adhesion layer, wherein the ratio of the thickness of the second layer 12 to the total thickness of the metallic base is 0.25 to 0.65.

## Description

### Technical Field

The present invention relates to a multilayer metal member for use in a fixation belt or a pressure roller, which member is particularly suitable for a fixation belt or a pressure roller disposed in a fixation part of an image-forming apparatus such as a copying machine, a facsimile machine, or a laser beam printer.

### Background Art

In recent image-forming apparatuses, image fixation is carried out by means of an endless fixation belt (endless belt or endless film) instead of a rubber roller-type fixation roller, in order to meet demand for downsizing of such apparatuses, energy savings, and high-speed printing and copying.

Even in an image fixation apparatus employing such a belt, the fixation belt is required to have excellent thermal conductivity and high dimensional stability. When the fixation belt is formed from a heat-resistant polymer such as a polyimide resin, difficulty is encountered in enhancing fixation speed, due to poor thermal conductivity, and an disadvantageously long time is required for reaching steady temperature for activation of the apparatus. In the case where the fixation belt is formed from a metal such as nickel, excellent thermal conductivity and high dimensional stability are attained, but the strength of the belt decreases after heat treatment performed in formation of a release layer on the surface thereof. In this case, the belt cannot be employed in practice due to short service life.

In order to solve the problem, there has been proposed a substrate formed through electrocasting a nickel-carbon alloy, the substrate having durability against heat treatment performed in formation of a release layer and exhibiting excellent adhesion to the release layer (see Patent Document 1).

Meanwhile, in a trend for images of higher pixel count, there is demand for reducing the thickness of the release layer, which can enhance toner fixability. Particularly, in an image fixation apparatus in which a fixation belt is disposed so as to oppose a pressure roller, and a pressure member for pressing the fixation belt against the pressure roller is disposed inside the fixation belt, reduction in thickness of the release layer and enhancement in adhesion of the release layer are expected.

For forming a thin release layer, there has been proposed a technique in which a PFA tube is melt-adhered by use of an adhesive containing PFA particles through melting of the PFA particles (see Patent Document 2).

However, high-temperature treatment (about 300°C) must be performed for melting PFA particles. In this case, a substrate formed of electrocast nickel embrittles by the heat treatment, whereby the substrate is readily broken by bending stress in use thereof, which is problematic.

### Prior Art Documents

### Patent Documents

Patent Document 1: Japanese Patent Application Laid-Open (*kokai*) No. 2004-004660
Patent Document 2: WO 2008/126915, pamphlet

### Summary of the Invention

### Problems to be Solved by the Invention

In view of the foregoing, an object of the present invention is to provide a multilayer metal member for image fixation having an electrocast nickel substrate, which metal member maintains high durability even after provision of a release layer at high temperature treatment and has improved durability.

### Means for Solving the Problems

In a first mode of the present invention for attaining the aforementioned object, there is provided a multilayer metal member for image fixation, characterized in that the metal member comprises:
a metallic base having a first layer which is an electrocast seamless belt made of nickel or a nickel alloy, and a second layer which is an electrocast seamless belt made of a metal having a Young's modulus lower than that of the first layer; and
a fluororesin layer provided on the second layer side of the metallic base by the mediation of an adhesion layer,
wherein the ratio of the thickness of the second layer to the total thickness of the metallic base is 0.25 to 0.65.

A second mode is directed to a specific embodiment of the multilayer metal member for image fixation of the first mode, wherein the second layer is a plating layer made of copper or a copper alloy, and the metal member further includes a third layer which is formed on the second layer and which is made of a metal having a corrosion resistance higher than that of the second layer.

A third mode is directed to a specific embodiment of the multilayer metal member for image fixation of the second mode, wherein the third layer is a plating layer made of nickel or a nickel alloy.

A fourth mode is directed to a specific embodiment of the multilayer metal member for image fixation of any one of the first to third modes, which metal member has an elastic layer intervening between the metallic base and the fluororesin layer.

### Effects of the Invention

The multilayer metal member for image fixation of the present invention has a first layer which is an electrocast seamless belt made of nickel or a nickel alloy, the seamless belt being able to be produced at high dimensional stability and high durability, and a second layer which is an electrocast seamless belt made of a metal having a Young's modulus lower than that of the first layer. Thus, the metal member maintains excellent durability even after bonding of a fluororesin layer at high temperature. In addition, by virtue of the second layer having a Young's modulus lower than that of the first layer, bending stress is reduced under repeated bending conditions when the member is employed as a fixation member. Thus, the durability of the metal member can be further enhanced. That is, breakage of the metal member by bending stress in use thereof can be prevented, and durability of the member can be enhanced.

### Brief Description of the Drawings

[FIG. 1] A cross-section and an enlarged part of the cross-section of a multilayer metal member for image fixation according to an embodiment of the present invention.
[FIG. 2] A sketch of an exemplary fixation part employing a multilayer metal member for image fixation according to an embodiment of the present invention.
[FIG. 3] A sketch of another exemplary fixation part employing a multilayer metal member for image fixation according to an embodiment of the present invention.
[FIG. 4] A sketch showing the mode of the Test Example.
[FIG. 5] A graph showing the results of Test Example.

### Modes for Carrying Out the Invention

The multilayer metal member of the present invention for image fixation includes a metallic base having a first layer which is an endless-belt-form electrocast seamless belt made of nickel or a nickel alloy, and a second layer which is an electrocast seamless belt made of a metal having a Young's modulus lower than that of the first layer; an elastic layer provided on the second layer side of the metallic base by the mediation of the first adhesion layer; and a fluororesin layer provided on the elastic layer by the mediation of a second adhesion layer formed on the elastic layer.

The multilayer metal member for image fixation of the present invention has a first layer which is an electrocast seamless belt made of nickel or a nickel alloy, the seamless belt being able to be produced at high precision and high durability, and a second layer which is an electrocast seamless belt made of a metal having a Young's modulus lower than that of the first layer. Thus, the metal member maintains excellent durability even after bonding of a fluororesin layer at high temperature. Conceivably, by virtue of the second layer having a Young's modulus lower than that of the first layer, bending stress is reduced under repeated bending conditions when the member is employed as a fixation member. Thus, the durability of the metal member can be further enhanced. That is, breakage of the metal member by bending stress in use thereof can be prevented, and durability of the member can be enhanced.

The first layer is formed of electrocast nickel. As used herein, the term "electrocast nickel" refers to an electrocast nickel of elemental nickel and an electrocast nickel alloy containing one or more elements selected from among phosphorus (P), iron (Fe), cobalt (Co), and manganese (Mn).

The metal that forms the second layer is a metal having a Young's modulus lower than that of nickel or a nickel alloy forming the first layer. The Young's modulus of the second layer is 80% or less the Young's modulus of nickel or a nickel alloy, preferably 2/3 or less. Since the Young's modulus of nickel is about 155 GPa, the Young's modulus of the second layer is formed of a metal having 124 GPa or less, preferably 103 GPa or less. Specific examples of the metal include copper, silver, gold, and zinc. Among them, the electrocast seamless belt is preferably formed from copper or a copper alloy, from the viewpoint of the production technique and cost of the second layer.

However, since copper or a copper alloy is readily covered with oxide coating film, a third layer is preferably provided on the second layer formed of an electrocast seamless belt made of copper or a copper alloy. The third layer is formed of a metal having a corrosion resistance higher than that of the second layer.

The third layer is not necessarily formed through electrocasting, so long as the third layer has an sufficiently small thickness for providing corrosion resistance. Alternatively, the third layer may be formed through plating. Examples of the metal that formed the third layer include gold, silver, nickel, and nickel alloys. Of these, nickel and nickel alloys are particularly preferred.

The multilayer metal member of the present invention for image fixation has a metallic base having a multilayer structure including two, three, or four or more layers of endless belts. The ratio of the thickness of the second layer to the total thickness of the metallic base (hereinafter may be referred to as a "second layer thickness ratio) is 0.05 to 0.80, preferably 0.25 to 0.65.

When the second layer thickness ratio is less than the aforementioned ranges, durability cannot be drastically enhanced, whereas when the second layer thickness ratio exceeds the aforementioned ranges, the effect of enhancing durability is impaired. Both cases are not preferred.

The total thickness of the metallic base is preferably 20 to 100 µm, more preferably 25 to 60 µm. When the total thickness is less than the ranges, the entire strength of the metallic base is not ensured, whereas when the total thickness exceeds the ranges, bending stress increases, thereby possibly reducing durability.

The metallic base of the present invention is formed of an electrocast nickel seamless belt, which has high dimensional stability and suitable surface properties.

The multilayer metal member of the present invention for image fixation has the elastic layer on the second layer side of the metallic base (on the second layer in the case of a bilayer structure, and on the third layer in the case of a trilayer structure) formed by the mediation of the first adhesion layer, and, on the elastic layer, the fluororesin layer formed by the mediation of the second adhesion layer.

The elastic layer is preferably formed of a material having high heat resistance. Examples of the material include silicone rubber, fluoro rubber, and urethane rubber. Of these, silicon rubber is preferred. The elastic layer has a thickness of, for example, 20 to 1,000 µm, preferably 50 to 500 µm, for enhancing toner fixability and image quality. In some specifications, no elastic layer is needed.

Specifically, the fluororesin layer is preferably a PFA tube, more preferably a heat-shrinkable tube. The adhesion layer is formed through heat treatment at 300°C or higher so as to reinforce adhesion of the fluororesin layer. Preferably, the adhesion layer is formed through heating a coating layer of an adhesive containing PFA particles at a temperature where PFA is melted.

In the adhesion step, when heat treatment is performed at 300°C or higher, an electrocast seamless belt formed of nickel or a nickel alloy is known to embrittle due to segregation of nickel sulfide contained in metal crystals. According to the present invention, the second layer which is an electrocast seamless belt made of a metal having a small Young's modulus is provided on the first layer. Therefore, even when the metallic base of the invention is heated at, for example, 320 to 350°C, the bending stress generated in the entire metallic base is smaller than that in a similar metallic base of a single layer structure. Thus, durability of the metallic base of the invention can be improved.

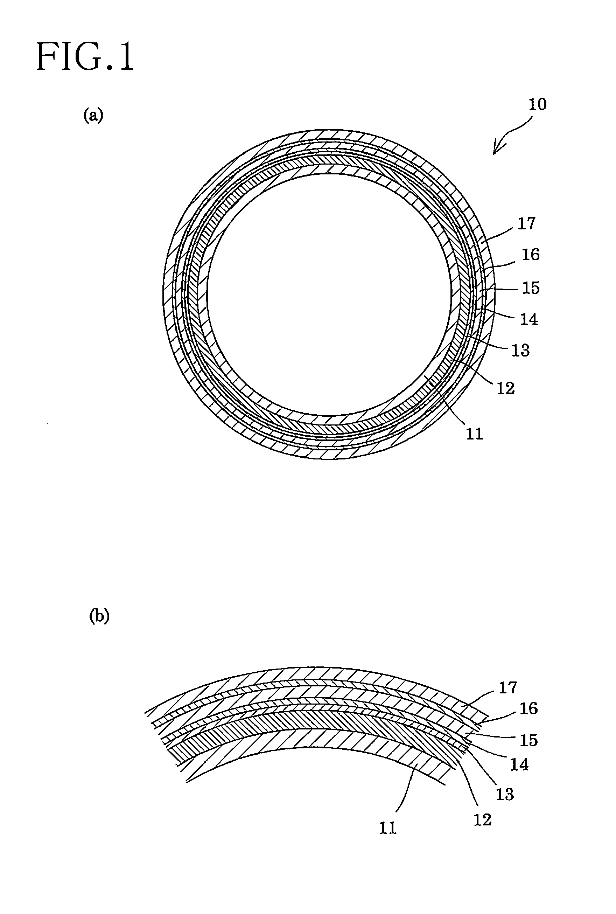

Hereinafter, an embodiment of the present invention will be described. FIG. 1 schematically shows an exemplary multilayer metal member for image fixation having a metallic base of a 3-layer structure.

A multilayer metal member for image fixation 10 has a metallic base composed of a first layer 11 which is an endless belt made of an electrocast nickel seamless belt, a second layer 12 made of copper or a copper alloy, and a third layer 13 serving as an anti-corrosion film. On the third layer 13, an elastic layer 15 is provided by the mediation of a first adhesion layer 14, and on the elastic layer 15, a fluororesin layer 17 is provided by the mediation of a second adhesion layer 16.

The first layer 11 is an endless belt formed of an electrocast seamless belt of nickel or a nickel alloy (hereinafter may be referred to as an "electrocast nickel seamless belt"). Examples of the nickel alloy include nickel alloys containing one or more elements selected from among P, Fe, Co, and Mn. The first layer 11 formed of an electrocast nickel seamless belt is preferably produced from an electrocast Ni-P alloy, which more preferably contains phosphorus in an amount of 0.05 mass% to 1 mass%. When the first layer 11 formed of an electrocast nickel seamless belt has a phosphorus content lower than 0.05 mass%, thermal fatigue characteristics of the first layer 11 may be insufficiently improved, whereas when the phosphorus content is in excess of 1 mass%, flexibility of the first layer 11 may be impaired.

The first layer 11 made of an electrocast nickel seamless belt is generally formed through electrocasting by use of a nickel electrocasting bath; for example, a Watts bath containing as a predominant component nickel sulfate or nickel chloride, or a sulfamate bath containing as a predominant component nickel sulfamate. In electrocasting, a plating substrate is thick-plated, and the thus-formed metal layer is removed from the substrate, to thereby provide a metal product.

The first layer 11 made of an electrocast nickel seamless belt may be produced through electrocating a nickel plating film on a cylindrical substrate made of stainless steel, brass, aluminum, etc. by use of a nickel electrocasting bath. In the case where the plating substrate is made of a non-conducting material such as silicone resin or gypsum, the non-conducting substrate is subjected to a conducting-property-imparting treatment by use of graphite or copper powder, or through silver mirror reaction, sputtering, or a similar process. When a metallic electrocasting substrate is used, the surface of the substrate is preferably subjected to a release-facilitating treatment, for example, forming a release film such as oxide film, compound film, or graphite coating film, in order to facilitate removing the formed nickel plating film from the substrate.

The nickel electrocasting bath contains a nickel ion source, an anode-dissolving agent, a pH buffer, and other additives. Examples of the nickel ion source include nickel sulfamate, nickel sulfate, and nickel chloride. In the case of Watts bath, nickel chloride serves as an anode-dissolving agent. In the case of other nickel baths, ammonium chloride, nickel bromide, and other compounds are used. The nickel plating is generally performed at a pH of 3.0 to 6.2. In order to adjust the pH to fall within the preferred range, a pH buffer such as boric acid, formic acid, nickel acetate, or the like is used. Other additives employed in the nickel electrocasting bath include a brightener, a pit-corrosion-preventing agent, and an internal stress-reducing agent, for the purposes of smoothing, pit corrosion prevention, reducing crystal grain size, reduction of residual stress, etc.

The nickel electrocasting bath is preferably a sulfamate bath. One exemplary composition of the sulfamate bath includes nickel sulfamate tetrahydrate (300 to 600 g/L), nickel chloride (0 to 30 g/L), boric acid (20 to 40 g/L), a surfactant (appropriate amount), and a brightener (appropriate amount). The pH is 2.5 to 5.0, preferably 3.5 to 4.7, and the bath temperature is 20 to 65°C, preferably 40 to 60°C. The first layer 11 formed of an electrocast nickel alloy may be produced in a nickel metal electrocasting bath appropriately containing a water-soluble phosphorus-containing acid salt (e.g., sodium phosphite), a metal sulfamate salt (e.g., ferrous sulfamate, cobalt sulfamate, or manganese sulfamate), potassium fluorotitanate, etc.

When the first layer 11 is formed from an electrocast Ni-P alloy through electrocasting by use of the aforementioned nickel electrocasting bath, in particular, a phosphorus-containing nickel sulfamate bath, under the aforementioned conditions, thermal fatigue characteristics of the first layer 11 are improved.

The second layer 12 is made of a metal having a Young's modulus lower than that of an electrocast nickel seamless belt. From the viewpoints of adhesion to the first layer 11, and ease of electrocast seamless belt production, the metal is preferably copper or a copper alloy.

Preferably, the second layer 12 is produced through electroplating. In one specific procedure, a plating film is formed on the surface of the first layer 11 by use of a plating bath, to thereby from the second layer 12. By virtue of the thus-formed second layer 12, adhesion to the first layer 11 can be enhanced. In the case where the second layer 12 is formed of copper, in one specific procedure, a copper plating film is formed by use of a copper plating bath. Examples of the copper plating bath include a copper sulfate plating bath, a copper pyrophosphate plating bath, a copper cyanide plating bath, and a copper electroless plating bath. Of these, a copper sulfate plating bath is preferably used. One preferred copper sulfate plating bath comprises copper sulfate (150 to 250 g/L), sulfuric acid (30 to 150 g/L), hydrochloric acid (0.125 to 0.25 mL/L), and a brightener (appropriate amount). Alternatively, the second layer 12 may be formed through electroless plating, physical vapor deposition, chemical vapor deposition, or a similar technique.

In the case where the second layer 12 is a plating layer of copper or a copper alloy, the third layer 13 is provided for preventing corrosion. The third layer 13 is preferably formed through electroplating. In one procedure, a plating film is formed on the surface of the second layer 12 by use of a plating bath, to thereby provide the third layer 13. In this case, the third layer 13 is preferably formed such that contact of the surface of the second layer 12 with air is prevented to a maximum extent. As a result, corrosion of the second layer 12 can be effectively prevented. By virtue of the third layer 13 formed through electroplating, adhesion to the second layer 12 can be enhanced. In addition, the third layer 13 having a thickness of 3 µm or less can be formed at high precision. In the case where the third layer 13 is formed of nickel or a nickel alloy, the third layer 13 may be formed through the same method as employed in production of the first layer 11. In the case where the third layer 13 is formed of a nickel alloy such as an Ni-P alloy, an Ni-Fe alloy, an Ni-Co alloy, an Ni-Co-P alloy, or an Ni-Mn alloy, the third layer 13 may be formed through the same method as employed in production of the first layer 11, except that the electrodes or other conditions are appropriately modified. Alternatively, the third layer 13 may be formed through electroless plating, physical vapor deposition, chemical vapor deposition, or a similar technique.

The third layer 13 has a thickness of 0.5 µm to 2 µm, preferably about 1 µm. When the thickness is less than 0.5 µm, the effect of preventing oxidation of the second layer 12 may fail to be sufficiently attained.

The first adhesion layer 14 is preferably formed from a silicone-base adhesive, and preferably has a thickness of 1 to 15 µm. In this embodiment, the elastic layer 15 is formed of silicone rubber.

The second adhesion layer 16 is formed by use of an adhesive containing PFA particles and through melting PFA. The second adhesion layer 16 is preferably as thin as possible, so long as adhesion is ensured. The thickness is, for example, 1 µm to 20 µm, preferably 1 µm to 10 µm.

The fluororesin layer 17 is, for example, a layer formed of a high-releasable PFA. The thickness of the fluororesin layer 17 is, for example, 1 to 150 µm, preferably 5 to 30 µm.

When the thickness of the second adhesion layer 16 and that of the fluororesin layer 17 are adjusted to 1 µm to 20 µm and 1 to 150 µm, respectively, toner fixability can be enhanced, and high quality image can be obtained.

The first adhesion layer 14 is formed by heating an adhesive at a temperature higher than the melting point of PFA; for example, 320 to 350°C, preferably 320 to 330°C.

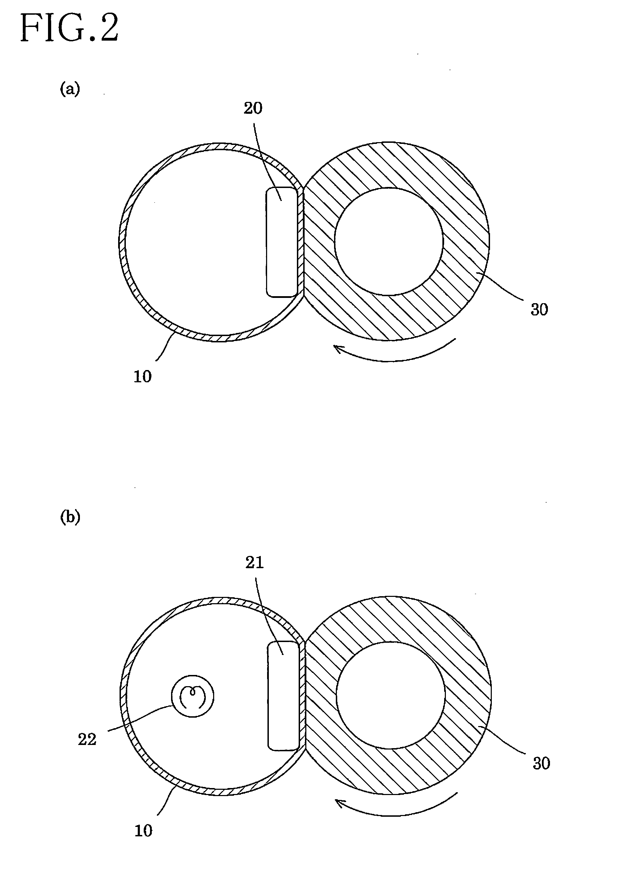

The aforementioned multilayer metal member for image fixation 10 is employed in a mode shown in, for example, FIG 2(a). The multilayer metal member for image fixation 10 has a pressure member 20 provided with a heater disposed therein. In use, the metal member 10 is pressed against a pressure roller 30 by means of the pressure member 20.

Thus, during pressing by means of the pressure member 20, a large bending stress is generated in the multilayer metal member for image fixation 10 at the ends of the pressure member 20. However, by virtue of provision of a second layer 12 which is formed on the outer surface of the first layer 11 and which has a specific thickness and a small Young's modulus, the bending stress is reduced, leading to remarkably improved durability.

FIG. 2(b) shows another operation mode by use of a heater 22, which is placed outside the pressure member 21.

Thus, the multilayer metal member for image fixation 10 of the present invention is more effectively employed as a fixation belt which is pressed against a pressure roller by the mediation of the pressure member 20 or 21 and which is brought into contact with the pressure roller over a wide width.

However, needless to say, when the multilayer metal member of the present invention is employed as a fixation belt of a different type, durability can be also enhanced. Also, the multilayer metal member of the present invention may be employed as a belt of an electromagnetic induction heating mode, in which an exciting coil (heat source) is disposed inside or outside the multilayer metal member for image fixation 10.

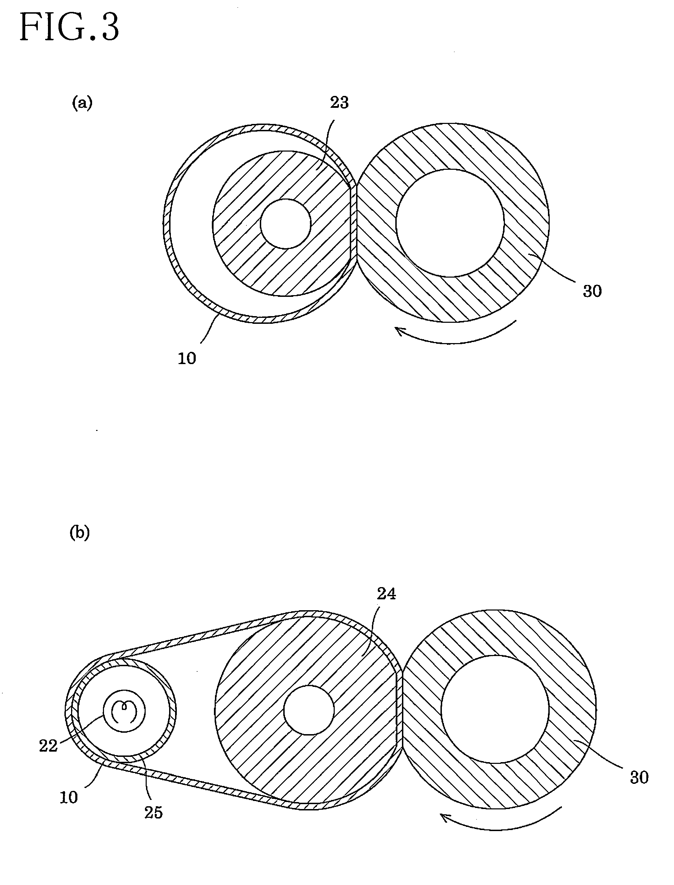

FIG. 3 shows another mode of employment. In the mode shown in FIG. 3(a), a fixation roller 23 having a heater inside the multilayer metal member for image fixation 10 is disposed instead the pressure member 20 or 21, and the multilayer metal member for image fixation 10 is pressed against a pressure roller 30 by the means of the fixation roller 23. The heating means for the multilayer metal member for image fixation 10 may be disposed inside the fixation roller 23, or outside the multilayer metal member for image fixation 10. In the mode shown in FIG. 3(b), there are provided, in the multilayer metal member for image fixation 10, a pressure roller 30, and a heating roller 25 including therein a heater and facing opposite an inner roller 24 by the mediation of the multilayer metal member for image fixation 10. By means of the pressure roller 30 and the inner roller 24, the multilayer metal member for image fixation 10 is rotated. In this mode, the heater 22 of the heating roller 25 may be disposed outside the multilayer metal member for image fixation 10.

As described above, no particular limitation is imposed on the mode of employment of the fixation belt.

The multilayer metal member for image fixation of the present invention is suitably employed as any of the aforementioned fixation belts. However, the metal member of the present invention may also be employed as a transfer-fixation belt, which fixes a toner image immediately after image transfer.

### Examples

The present invention will next be described in detail by way of examples, which should not be construed as limiting the invention thereto.

### (Samples 1 to 10)

A phosphorus sulfamate electrocast bath of interest was prepared from nickel sulfamate (500 g/L), sodium phosphite (150 mg/L), boric acid (30 g/L), trisodium naphthalene-1,3,6-trisulfonate (1.0 g/L) serving as a primary brightener, and 2-butyne-1,4-diol (20 mg/L) serving as a secondary brightener.

While the electrocast bath was maintained at 60°C and a pH of 4.5, electrocasting was performed with a stainless steel cylindrical substrate (outer diameter: 30 mm) serving as a cathode, and a depolarized nickel serving as an anode at a current density of 16 A/dm², to thereby deposit, on the outer surface of the steel substrate, a metal layer having a thickness shown in Table 1. The metal layer was removed from the substrate, to thereby yield a first layer formed of an electrocast nickel-phosphorus alloy film and having an inner diameter of 30 mm and a thickness shown in Table 1. The first layer had a phosphorus content of 0.5 mass%.

On the first layer, a second layer was formed from an electrocasting bath having the following composition. Specifically, a copper sulfate electrocasting bath of interest was prepared from copper sulfate (180 g/L), sulfuric acid (60 g/L), thiourea (0.04 g/L), and molasses (0.8 g/L). Then, the electrocasting bath was heated to and maintained at 45°C, and electrocasting was performed with the aforementioned electrodeposited metal layer serving as a cathode, and a Cu-P as an anode at a current density of 5 A_{/}dm², to thereby form, on the first layer, a second layer made of copper having a thickness shown in Table 1. The second layer had a specific resistance of 1.7 × 10⁻⁸ Ω·m and a relative permeability of 1.6.

On the second layer, a third layer made of a nickel-phosphorus alloy and having a thickness of 1 µm was formed in the same manner. The metal-deposited substrate was removed from the electrocasting bath, and metal fins at both ends were cut away, to thereby produce a metallic base of a 3-layer structure.

The metallic base was heated at 350°C for 30 minutes, to thereby prepare samples 1 to 10.

### (Comparative sample)

A metallic base of Comparative Example was obtained through the same method as employed for producing the first layer of each of samples 1 to 10. The metallic base of Comparative Example had a thickness of 30 µm.

### (Test Example 1) Folding endurance test after heat treatment

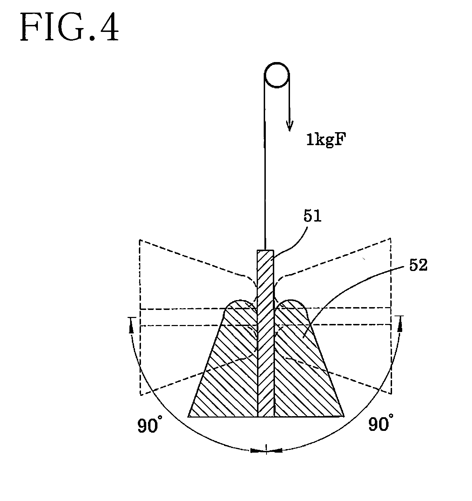

A folding endurance test was performed by means of a folding endurance tester described in the folding endurance test (MIT) according to JIS 8115. The feature of the test is shown in FIG. 4.

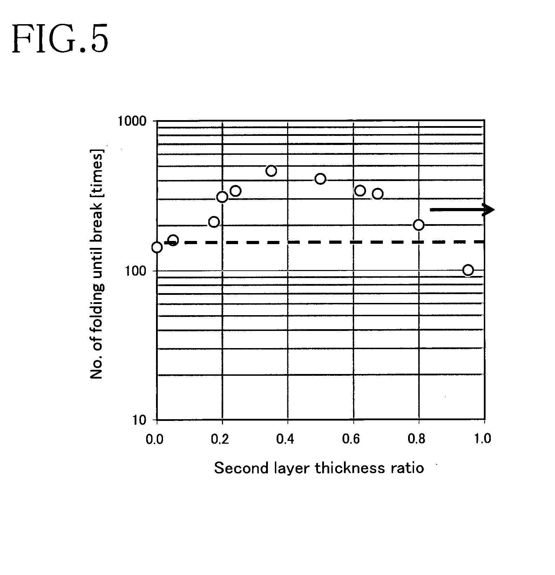

Test pieces 51 having a width of 15 mm were prepared by cutting each of samples 1 to 10 and the comparative sample. In the test, each test piece 51 was maintained while it was suspended by a pulley at a counter load of 1 kgF. The bottom portion of the test piece 51 was bound with a clamp 52 having a tip (R = 2 mm), and was swung over a range of 90° left to 90° right (total 180°) by means of the clamp 52. The swing speed was 170 times/minute. The number of swing cycles until the test piece was broken was counted. Table 1 and FIG. 5 show the results.

**[Table 1]**

| | 1st layer T1 (µm) | 2nd layer T2 (µm) | 3rd layer T3 (µm) | T2/Total thickness | No. of folding until break |
|---|---|---|---|---|---|
| Sample 1 | 37 | 2 | 1 | 0.05 | 160 |
| Sample 2 | 32 | 7 | 1 | 0.18 | 212 |
| Sample 3 | 31 | 8 | 1 | 0.20 | 310 |
| Sample 4 | 29 | 10 | 1 | 0.25 | 330 |
| Sample 5 | 25 | 14 | 1 | 0.35 | 463 |
| Sample 6 | 19 | 20 | 1 | 0.50 | 410 |
| Sample 7 | 13 | 26 | 1 | 0.65 | 350 |
| Sample 8 | 12 | 27 | 1 | 0.68 | 324 |
| Sample 9 | 7 | 32 | 1 | 0.80 | 200 |
| Sample 10 | 1 | 38 | 1 | 0.95 | 100 |
| Comp. sample | 40 | - | - | 0 | 143 |

### (Results)

Regarding the number of folding until break, sample 1, having a ratio of the thickness of the second layer to the total thickness of 0.05, exhibited a durability improvement of about 10%, with respect to the comparative sample. Sample 2, having a thickness ratio of 0.18, exhibited a number of folding until break in excess of 200, which is a durability improvement of 48% (about 50%) with respect to the comparative sample. Samples 3, 4, 5, 6, 7, and 8, having thickness ratios of 0.20, 0.25, 0.35, 0.50, 0.65, and 0.68, respectively, exhibited a durability improvement of 100% or higher. The durability is thought to be at a highest level, when the second layer thickness ratio is 0.35 to 0.50. When the thickness ratio increases, the durability tends to decrease. The test has revealed the following. When the thickness ratio is 0.18 to 0.80, the number of folding until break reaches 200 or higher, which corresponds to about 50% improvement with respect to the comparative sample. Thus, a remarkable improvement effect can be attained in a thickness range of 0.18 to 0.80. Particularly when the thickness ratio is 0.20 to 0.68, a durability improvement of 100% or higher can be attained.

### Description of Reference Numerals

- 10: multilayer metal member for image fixation
- 11: first layer
- 12: second layer
- 13: third layer
- 14: first adhesion layer

- 15: elastic layer
- 16: second adhesion layer
- 17: fluororesin layer

## Claims

1. A multilayer metal member for image fixation, **characterized in that** the metal member comprises:
a metallic base having a first layer which is an electrocast seamless belt made of nickel or a nickel alloy, and a second layer which is an electrocast seamless belt made of a metal having a Young's modulus lower than that of the first layer; and
a fluororesin layer provided on the second layer side of the metallic base by the mediation of an adhesion layer,
wherein the ratio of the thickness of the second layer to the total thickness of the metallic base is 0.25 to 0.65.

2. A multilayer metal member for image fixation according to claim 1, wherein the second layer is a plating layer made of copper or a copper alloy, and the metal member further includes a third layer which is formed on the second layer and which is made of a metal having a corrosion resistance higher than that of the second layer.

3. A multilayer metal member for image fixation according to claim 2, wherein the third layer is a plating layer made of nickel or a nickel alloy.

4. A multilayer metal member for image fixation according to any one of claims 1 to 3, which metal member has an elastic layer intervening between the metallic base and the fluororesin layer.
